# EUROPEAN PATENT SPECIFICATION

(11) **EP 1 829 708 B1**
(45) Date of publication and mention of the grant of the patent: **15.04.2009**
(21) Application number: 06797400.6
(22) Date of filing: 04.09.2006
(51) Int. Cl.: B44C 1/10, B44C 3/02, B32B 33/00, B44C 3/12, C09J 7/02, B60R 13/00, B62J 99/00

(54) **DECORATIVE SHEET, DECORATED MOLDED ARTICLE, AND MOTOR VEHICLE**
DEKORFOLIE, DEKORIERTER GEFORMTER ARTIKEL UND MOTORFAHRZEUG
FEUILLE DÉCORATIVE, ARTICLE MOULÉ DÉCORÉ ET VÉHICULE MOTORISÉ

(30) Priority: 13.09.2005 JP 2005264892
(43) Date of publication of application: 05.09.2007
(73) Proprietor: Yamaha Hatsudoki Kabushiki Kaisha, Iwata-shi, Shizuoka 438-8501 (JP)
(72) Inventor: SUZUKI, Yasuo, Iwata-shi Shizuoka, 438-8501 (JP); MOROZUMI, Naohiro, Iwata-shi Shizuoka, 438-8501 (JP)
(74) Representative: Grünecker, Kinkeldey, Stockmair & Schwanhäusser Anwaltssozietät
(86) International application number: PCT/JP2006/317477
(87) International publication number: WO 2007/032223

(56) References cited:
- EP-A- 1 547 764
- JP-A- 04 126 691
- JP-A- 04 135 837
- JP-A- 06 255 066
- JP-A- 08 058 052
- JP-A- 08 096 351
- JP-A- 2000 204 328
- JP-A- 2002 319 188
- JP-U- 60 115 281
- US-A- 5 869 168

## Description

### TECHNICAL FIELD

The present invention relates to a decorative sheet for use to decorate a formed product and also relates to a formed product decorated with such a decorative sheet and to a motor vehicle including such a decorated formed product.

### BACKGROUND ART

Recently, it was proposed that a decorative sheet be attached to the surface of a formed product as a technique of decorating various types of formed products. A formed product with a decorative sheet can be recycled more easily than a formed product with a painted surface. In addition, a decorated product can have a different type of fine appearance from that of a painted product. That is why a decorative sheet contributes to improving the appearance of formed products noticeably.

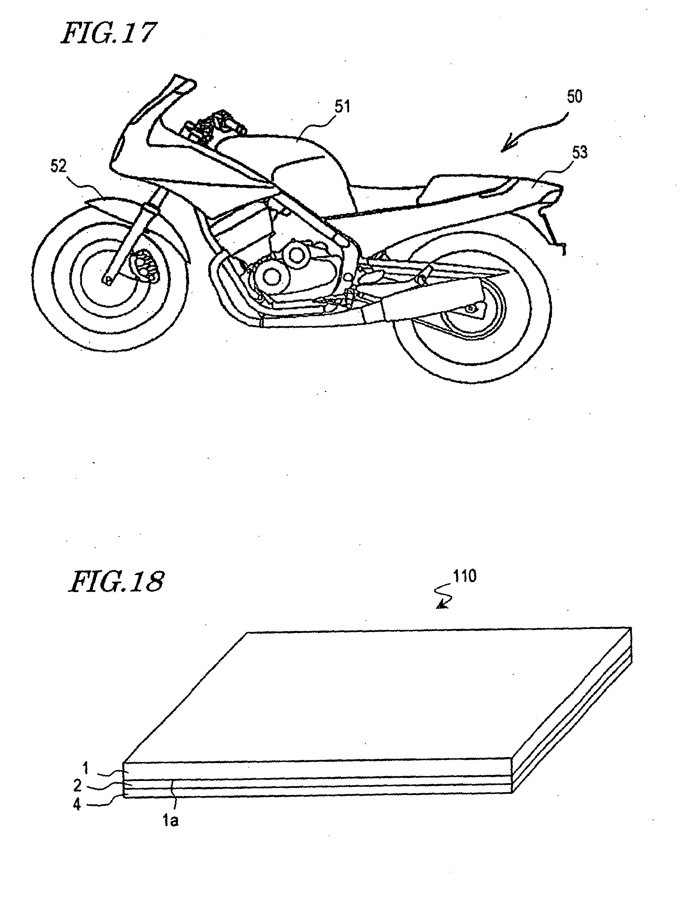

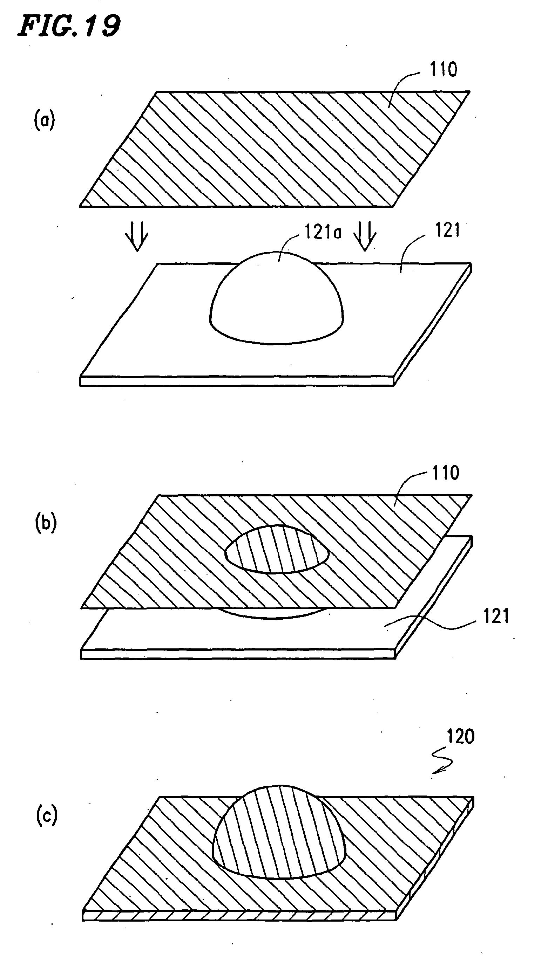

FIG. **18** shows an example of a decorative sheet. The decorative sheet **110** shown in FIG. **18** includes a base member **1** of a resin material, a decoration layer **2** arranged on the principal surface **1a** of the base member **1,** and an adhesive layer **4** deposited on the decoration layer **2.** The decoration layer **2** may be formed by a printing process, for example. The adhesive layer **4** may be formed by dry-laminating a resin adhesive, for instance. By attaching this decorative sheet **110** to the surface of the body **121** of a formed product in the order shown in FIGS. **19(a), 19(b)** and **19(c)****,** a decorated formed product **120** with a decorated surface can be obtained.

The formed product **121** shown in FIG. **19(a)** includes a hemispherical (cuplike) raised portion **121a** and therefore has a rugged surface. For that reason, the decorative sheet **110** being attached is stretched so as to follow such ruggedness perfectly. To stretch the decorative sheet **110** effectively, the decorative sheet **110** is typically heated and softened before being attached. A vacuum forming system for making a decorated formed product **120** such as that shown in FIG. **19(c)** by using the decorative sheet **110** is disclosed in Patent Document No. 1, for example.
**Patent Document No. 1:** Japanese Patent Application Laid-Open Publication No. 2002-79573
Moreover, EP 1 547 764 discloses a decorative sheet with a base, a decoration sheet and an adhesive for adhering the base member to the decoration sheet.

### DISCLOSURE OF INVENTION

### PROBLEMS TO BE SOLVED BY THE INVENTION

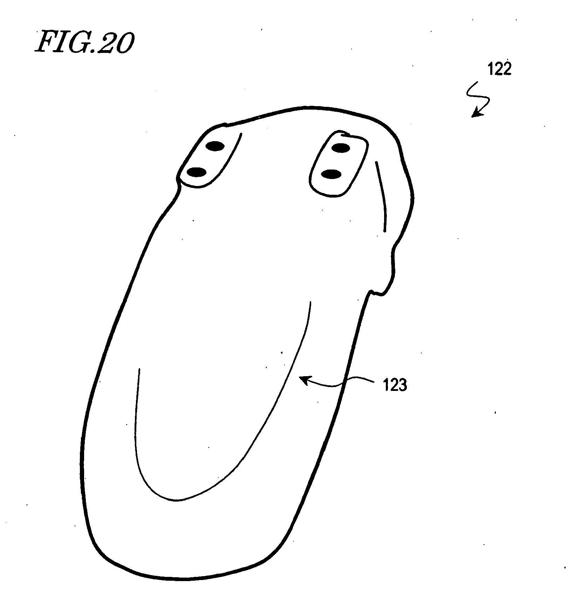

If a decorative sheet is attached to a formed product with a rugged surface, however, the resultant decorated formed product may have an uneven gloss on the surface, thus possibly diminishing the beauty of its appearance. FIG. **20** shows a motorcycle fender **122** decorated with the decorative sheet **110.** As shown in FIG. **20****,** a string of uneven gloss **123** appears on a part of the surface of the fender **122** to ruin the beautiful appearance thereof.

In order to overcome the problems described above, the present invention has an object of providing a decorative sheet that can decorate a formed product without diminishing the beauty of its appearance, a formed product decorated with such a decorative sheet, and a motor vehicle including such a decorated formed product.

### MEANS FOR SOLVING THE PROBLEMS

A decorative sheet according to the present invention is used to decorate a formed product. The sheet includes: a decoration layer; a base member that supports the decoration layer; an adhesive layer for adhering the decoration layer and the base member onto the formed product; and a flow reducing member for reducing the flow of the adhesive layer. The flow reducing member is provided in the adhesive layer and is made of a material having a higher melting point than that of a material of the adhesive layer, thereby achieving the object described above.

In a preferred embodiment, the flow reducing member is fixed on the decoration layer.

In a preferred embodiment, the adhesive layer is arranged so as to cover the decoration layer and the flow reducing member that is fixed on the decoration layer.

In a preferred embodiment, the melting point of the material of the flow reducing member is higher than that of the material of the adhesive layer by at least 20 °C.

In a preferred embodiment, the elasticity of the material of the flow reducing member is at least twice as high as that of the material of the adhesive layer at 80 °C.

In a preferred embodiment, the flow reducing member has a recess on its surface that is in contact with the adhesive layer.

In a preferred embodiment, the thinnest portion of the flow reducing member with the recess is at most two-thirds as thick as the thickest portion thereof.

In a preferred embodiment, the decorative sheet according to the present invention includes a plurality of flow reducing members.

In a preferred embodiment, the flow reducing members are arranged at regular intervals.

In a preferred embodiment, the melting point of the material of the adhesive layer is lower than the glass transition temperature of the material of the base member by at least 30 °C.

In a preferred embodiment, the material of the base member is a resin.

In a preferred embodiment, the resin is a thermoplastic resin.

A decorated formed product according to the present invention includes: a formed product; and a decorative sheet that has been bonded to the surface of the formed product and has one of the structures described above, thereby achieving the object described above.

In a preferred embodiment, the formed product has been formed by a deep-drawing process and has such a shape that a draw diameter L and a draw depth D satisfy L≧100 mm and D/L≧1/3.

In a preferred embodiment, an outer surface of the decorative sheet bonded to the surface of the formed product has ruggedness corresponding to an arrangement pattern of the flow reducing members.

A motor vehicle according to the present invention includes a decorated formed product having one of the structures described above, thereby achieving the object described above.

### EFFECTS OF THE INVENTION

A decorative sheet according to the present invention includes a flow reducing member that reduces the flow of the adhesive layer. That is why when the sheet is bonded onto a formed product, the adhesive is rarely distributed unevenly and a string of uneven gloss can be virtually eliminated. Consequently, a formed product can be decorated with the decorative sheet of the present invention without diminishing the beauty of its appearance.

### BRIEF DESCRIPTION OF DRAWINGS

FIG. **1** is a perspective view schematically illustrating a decorative sheet according to a preferred embodiment of the present invention.
FIGS. **2(a)** and **2(b)** are plan views showing exemplary planar shapes of flow reducing members for a decorative sheet.
FIGS. **3(a)** and **3(b)** are plan views showing exemplary planar shapes of flow reducing members for a decorative sheet.
FIGS. **4(a)** and **4(b)** are plan views showing exemplary planar shapes of flow reducing members for a decorative sheet.
FIGS. **5(a)** and **5(b)** are plan views showing exemplary planar shapes of flow reducing members for a decorative sheet.
FIG. **6** is a plan view showing an exemplary planar shape of flow reducing members for a decorative sheet.
FIG. **7** is a plan view showing an exemplary planar shape of flow reducing members for a decorative sheet.
FIG. **8** schematically illustrates how to make the surface of a base member rugged so as to follow the arrangement pattern of flow reducing members.
FIG. **9** is a cross-sectional view schematically illustrating flow reducing members having a recess on their surface.
FIG. **10** is a cross-sectional view schematically illustrating a flow reducing member with a recessed surface.
FIG. **11** is a perspective view schematically illustrating a decorative sheet according to another preferred embodiment of the present invention.
FIG. **12** schematically illustrates a vacuum forming system for use to make a decorated formed product.
FIGS. **13(a)** and **13(b)** are cross-sectional views schematically illustrating processing steps of a decorated formed product manufacturing process.
FIGS. **14(a)** and **14(b)** are cross-sectional views schematically illustrating processing steps of the decorated formed product manufacturing process.
FIGS. **15(a), 15(b)** and **15(c)** are cross-sectional views schematically illustrating processing steps of the decorated formed product manufacturing process.
FIG. **16(a)** is a perspective view illustrating an example of a formed product decorated with the decorative sheet of the present invention and FIG. **16(b)** is a cross-sectional view of the product as viewed on the plane **16B-16B'** shown in FIG. **16(a)****.**
FIG. **17** is a side view schematically illustrating a motorcycle.
FIG. **18** is a perspective view schematically illustrating a conventional decorative sheet for use to decorate a formed product.
FIGS. **19(a)** through **19(c)** schematically illustrate a process of decorating a formed product with a decorative sheet.
FIG. **20** is a perspective view illustrating a motorcycle fender decorated with a conventional decorative sheet.
FIGS. **21(a)** through **21(c)** schematically illustrate a process of decorating a formed product with a conventional decorative sheet.

### DESCRIPTION OF REFERENCE NUMERALS

- **1**: base member
- **1a**: principal surface of base member
- **2**: decoration layer
- **2a**: ink layer
- **2b**: metal layer
- **4**: adhesive layer
- **5**: flow reducing member
- **5a**: recess
- **10**: decorative sheet
- **20**: decorated formed product
- **21**: formed product
- **22**: motorcycle fender
- **30**: gripping frame
- **31**: supporting stage
- **31a**: opening
- **33**: heater
- **34**: vacuum vessel
- **34a**: main vessel
- **34b**: sub-vessel
- **35, 36**: space
- **50**: motorcycle
- **51**: tank housing
- **52**: front fender
- **53**: tail cowl
- **100**: vacuum forming system

### BEST MODE FOR CARRYING OUT THE INVENTION

Hereinafter, preferred embodiments of the present invention will be described with reference to the accompanying drawings. It should be noted, however, that the present invention is in no way limited to the following specific preferred embodiments.

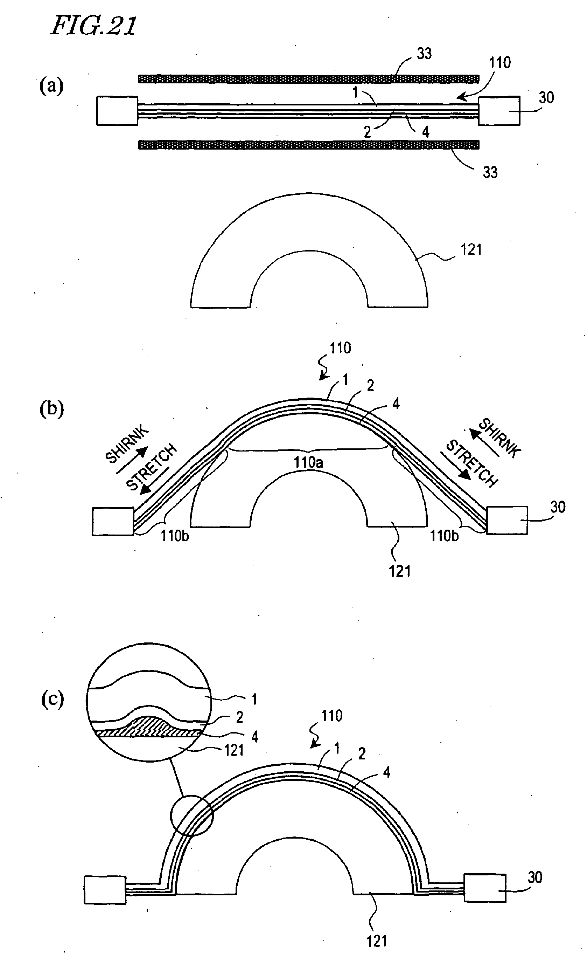

First of all, it will be described why the uneven gloss is produced by the conventional method. FIGS. **21(a)** through **21(c)** illustrate a conventional decorated formed product manufacturing process.

According to the conventional method, first, as shown in FIG. **21(a)****,** a decorative sheet **110** is fixed onto a gripping frame **30** and then heated with a heater **33.** In this process step, the decorative sheet **110** is heated to a temperature at which the base member **1** softens sufficiently and the adhesive layer **4** has good adhesiveness.

Next, as shown in FIG. **21(b)****,** the gripping frame 30 is brought down to press the decorative sheet **110** against a formed product **121.** In this process step, first, a portion **110a** of the decorative sheet **110** is attached to the formed product **121** as shown in FIG. **21(b)****.**

Subsequently, the decorative sheet **110** is pressurized by introducing compressed air into the space over the decorative sheet **110.** As a result, the other portion **110b** of the decorative sheet **110** is also bonded onto the formed product **121,** which is now covered entirely with the decorative sheet **110** as shown in FIG. **21(c)****.** After that, excessive portions of the decorative sheet 110 are cut off to complete a decorated formed product.

In this series of process steps, the portion **110a** of the decorative sheet **110** that contacts with the formed product **121** earlier is cooled more quickly due to conduction of heat into the formed product **121** than the other portion **110b** that contacts with the formed product **121** later. For example, if a decorative sheet **110** that has been heated to a temperature of 180°C to 190 °C is attached, the portion **110b** that is still out of contact with the formed product **121** has a temperature of 150 °C to 170 °C, but the temperature of that portion **110a** in contact with the formed product **121** decreases to somewhere between 60 °C and 120 °C, in the process step shown in FIG. **21(b)****.** That is why the flowability of the adhesive is lower in the portion **110a** in contact with the formed product **121** than in the non-contacting portion **110b.**

Also, in this series of process steps, the base member **1** of the decorative sheet **110** is once stretched so as to fit the surface shape of the formed product **121** closely and then is cooled and shrinks. FIG. **21(b)** shows the direction in which the base member **1** is stretched and the direction in which the base member **1** shrinks. As the base member **1** shrinks, the adhesive in the adhesive layer **4** on the base member **1** flows in the direction in which the base member **1** shrinks. The shifted adhesive stays in the vicinity of the boundary between a region where the adhesive has high flowability (i.e., the portion **110b** that will contact with the formed product **121** later) and a region where the adhesive has low flowability (i.e., the portion **110a** that has already contacted with the formed product **121).** As a result, as shown in the enlarged circle in FIG. **21(c)****,** the adhesive layer **4** gets raised around that boundary. Consequently, the decoration layer **2** and the base member **1** located over the adhesive layer **4** also get raised just like the adhesive layer **4,** thus making a string of uneven gloss sensible.

As described above, if the conventional decorative sheet is used, the uneven distribution of the adhesive will produce the uneven gloss and diminish the beauty of its appearance.

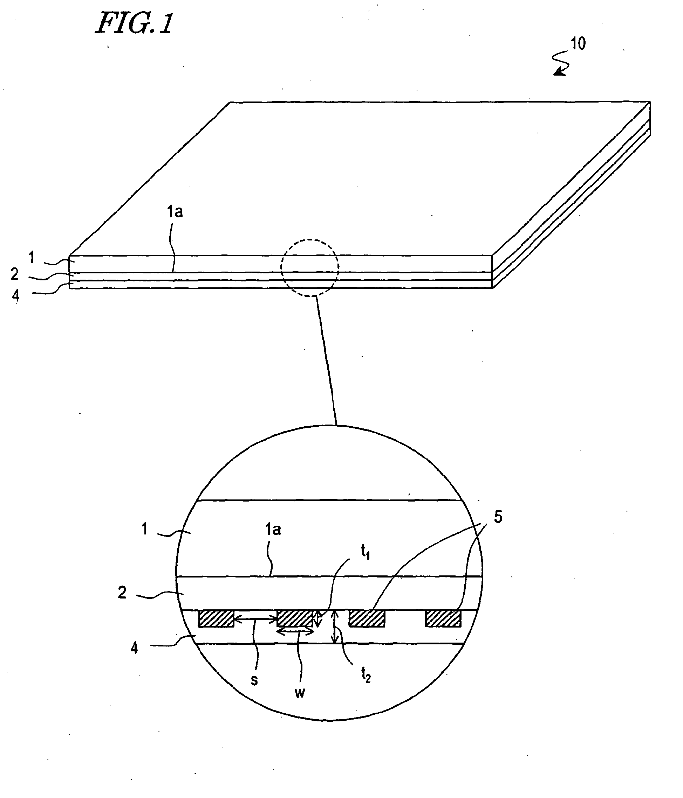

Hereinafter, a decorative sheet according to a preferred embodiment of the present invention will be described in detail with reference to the accompanying drawings. FIG. 1 schematically illustrates a decorative sheet **10** according to this preferred embodiment.

As shown in FIG. **1****,** the decorative sheet **10** of this preferred embodiment includes a decoration layer **2,** a base member **1** that supports the decoration layer **2,** and an adhesive layer **4** for bonding the decoration layer **2** and the base member 1 to a formed product.

The decoration layer **2** is arranged on one **1a** of the two principal surfaces of the base member **1.** The decoration layer **2** may be formed by printing ink, for example. The decorative sheet **10** is heated and stretched when attached onto the formed product. That is why the material of the decoration layer 2 preferably has excellent thermal resistance and bend strength. For example, the ink disclosed in Japanese Patent Application Laid-Open Publication No. 2002-275405 has excellent thermal resistance and bend strength, and therefore, can be used effectively as the material of the decoration layer **2.**

The base member **1** is made of a resin, and typically made of a thermoplastic resin such as polycarbonate or acrylic resin. The base member **1** should have some degree of rigidity that is high enough to serve as a sheet base member. That is why the material is preferably selected in view of this respect. Also, since the base member **1** will be located on the uppermost surface of the formed product after the decorative sheet **10** is attached to the formed product, the base member **1** preferably has good weather resistance and good damage resistance. For that reason, the other principal surface of the base member **1,** which is opposite to the principal surface **1a** with the decoration layer **2,** may be covered with a protective layer with good weather resistance and good damage resistance.

The base member 1 preferably has a thickness of no less than **50** µm and no more than 1,000 µm. This is because if the base member **1** had a thickness of less than **50** *µ*m, the sheet would be difficult to handle or its mechanical strength could be too low to avoid tears when the sheet is being attached. On the other hand, if the thickness of the base member **1** exceeded 1,000 µm, then the sheet could not fit closely the surface of the formed product.

The adhesive layer **4** is made of a urethane adhesive of a urethane resin or a urethane acrylate resin or an acrylic adhesive. To satisfy rigidity required for the product in its operating temperature range, the adhesive in the adhesive layer 4 preferably has an elasticity of 1 × 10³ Pa to 1 × 10⁶ Pa at 80 °C. If the elasticity at 80 °C were lower than 1 × 10³ Pa, then the adhesive would soften so much as to cause some problems when the product is used at a high temperature (e.g., when used outdoors in summer). On the other hand, if the elasticity at 80 °C were higher than 1 × 10⁶ Pa, then the adhesive would be too hard to resist impact. To overlay the formed product with the adhesive easily to cover its three-dimensional shape perfectly, the adhesive preferably has an elasticity of 1 × 10¹ Pa to 1 × 10⁵ Pa at 180 °C. This temperature range is preferred for the following reasons. Specifically, if the elasticity at 180 °C were less than 1 × 10¹ , Pa, then the adhesive would flow so easily during the forming process that a pattern representing the adhesive flow could appear on the surface of the formed product. On the other hand, if the elasticity at 180 °C were higher than 1 × 10⁵ Pa, bubbles would be easily produced between the adhesive layer **4** and the formed product when the decorative sheet **10** is being attached. The elasticity of the adhesive may be measured by a solid viscosity/elasticity measuring method compliant with JIS K7244-6 (or ISO 6721), for example.

The adhesive layer **4** preferably has a thickness of no less than 30 *µ*m and no more than 100 µm. If the adhesive layer **4** had a thickness of less than 30 µm, then the adhesive layer **4** could become too thin locally (e.g., to 10 µm or less, which is too small a thickness for an adhesive layer) when the decorative sheet **10** being bonded is stretched. On the other hand, if the adhesive layer **4** had a thickness of greater than 100 µm, then a portion of the adhesive layer **4** that has not been stretched sufficiently would easily create unevenness when the adhesive shrinks. It should be noted that as the decorative sheet **10** being bonded is stretched, the adhesive layer **4** is also stretched and comes to have a reduced thickness. That is why the thickness of the adhesive layer **4** is preferably increased appropriately according to the surface shape (or the magnitude of the ruggedness) of the formed product.

As shown in the enlarged circle in FIG. **1****,** the decorative sheet **10** of this preferred embodiment further includes a plurality of flow reducing members **5** that significantly reduce the flow of the adhesive layer **4.** These flow reducing members **5** are fixed on the decoration layer **2** and are arranged at regular intervals **s.** The adhesive layer **4** is formed so as to cover the decoration layer **2** and these flow reducing members **5** that are fixed on the decoration layer **2.**

As described above, the flow reducing members **5** arranged in the adhesive layer **4** are made of a material that has a higher melting point than that of the material of the adhesive layer **4.** That is why when the decorative sheet **10** is attached, the flow reducing members **5** reduce the flow of the adhesive layer **4.** As a result, the adhesive will not be distributed unevenly during the bonding process step and the strings of uneven gloss can be virtually eliminated. Consequently, by using the decorative sheet **10** of this preferred embodiment, a formed product can be decorated without diminishing the beauty of its appearance.

To reduce the flow of the adhesive layer **4** as effectively as possible, the melting point of the material of the flow reducing members **5** is preferably at least 20 °C higher than that of the material of the adhesive layer **4,** and the elasticity of the material of the flow reducing members 5 at 80 °C is preferably at least twice as high as that of the material of the adhesive layer **4.**

Also, to reduce the flow of the adhesive layer **4** efficiently, the thickness **t₁** of the flow reducing members **5** is preferably at least two-thirds as large as the thickness **t₂** of the adhesive layer **4** and the width w of the flow reducing members 5 is preferably no less than 200 µm and no more than 5 mm. If the width **w** were less than 200 µm, the flow reducing members could not overcome the flow pressure of the adhesive and could fail to reduce the flow sufficiently. On the other hand, if the width **w** were more than 5 mm, then the flow reducing members might block even an appropriate flow of the adhesive (i.e., the flow that follows up with the base member 1 being stretched).

Furthermore, to reduce the flow of the adhesive layer **4** efficiently, the flow reducing members **5** are preferably arranged at an interval of no less than 2 mm and no more than 10 mm. If the interval **s** were less than 2 mm, the flow reducing members might block even an appropriate flow of the adhesive (i.e., the flow that follows up with the base member 1 being stretched). On the other hand, if the interval s exceeded 10 mm, then the flow reducing members could not resist the flow pressure of the adhesive and could fail to reduce the flow sufficiently.

Typically, the flow reducing members **5** have a thickness **t₁** of about 5 µm to about 50 µm, a width of about 1 mm to about 2 mm and an interval **s** of about 1 mm to about **5** mm.

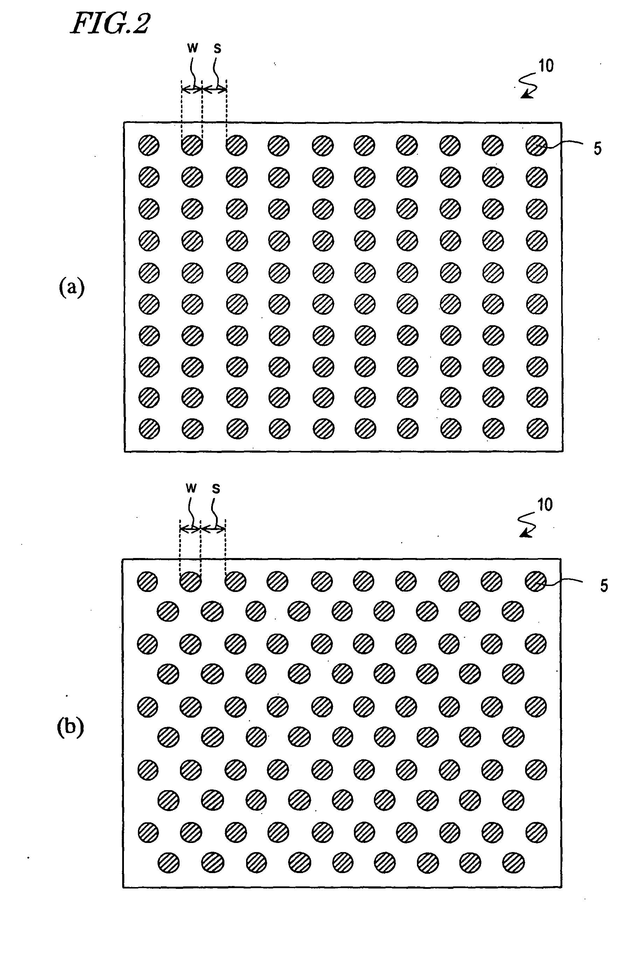

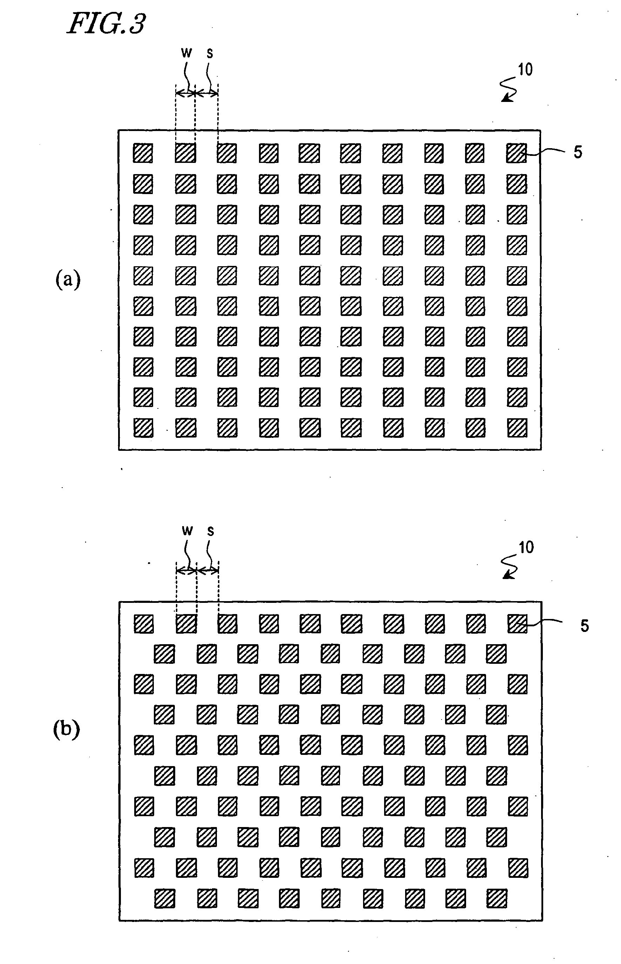

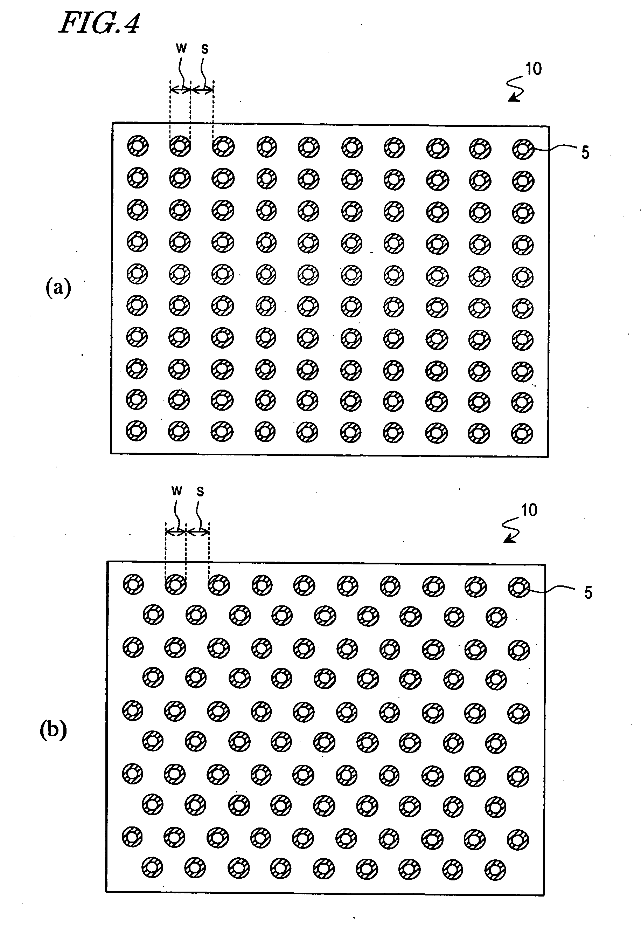

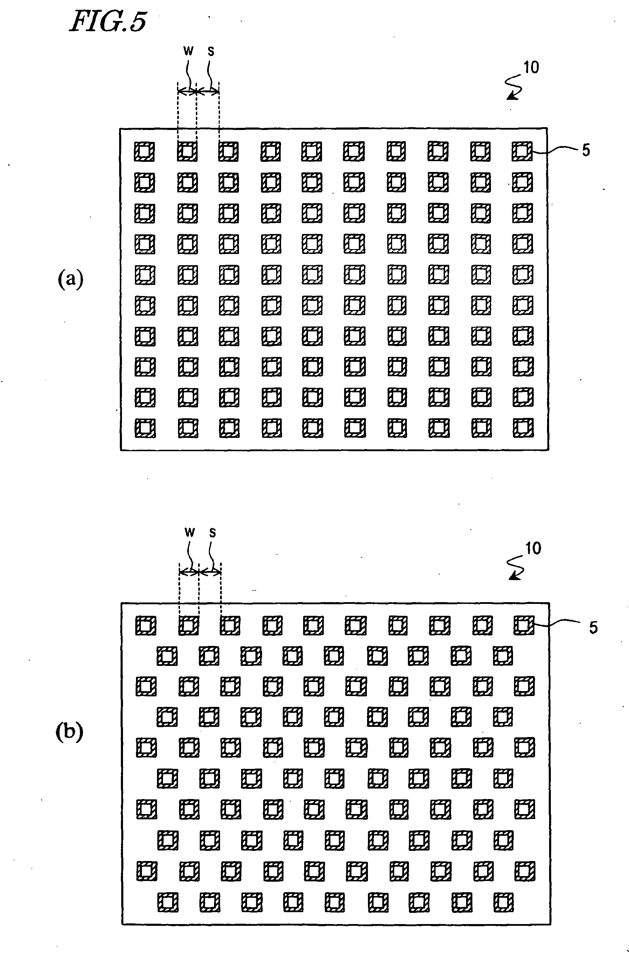

The planar shape of the flow reducing members **5** (as viewed perpendicularly to the principal surface of the base member **1**) may be either circular as shown in FIGS. **2(a)** and **2(b)** or rectangular as shown in FIGS. **3(a)** and **3(b)****,** or may even be any of various other shapes (e.g., a rectangular polygonal shape). Alternatively, the flow reducing members **5** may also have a circular ringlike planar shape as shown in FIGS. **4(a)** and **4(b)** or a polygonal ringlike planar shape as shown in FIGS. **5(a)** and **5(b)****.**

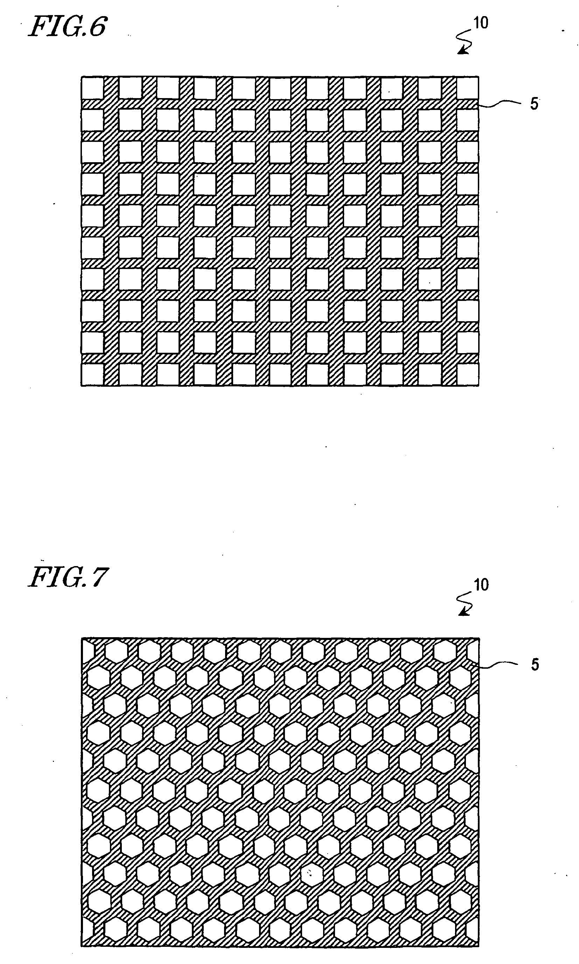

In the preferred embodiment described above, arrangements of multiple flow reducing members **5** have been described as specific examples. However, a single continuous member such as that shown in FIG. **6** or **7** may be provided as the flow reducing member **5.** Specifically, the flow reducing member **5** shown in FIG. **6** has a grating shape, while the flow reducing member **5** shown in FIG. 7 has a honeycomb shape with hollow holes. The flow of the adhesive layer **4** can also be reduced effectively even by using any of these alternative flow reducing members **5.**

The flow reducing members **5** are typically made of a resin. Examples of preferred materials for the flow reducing members **5** include thermosetting resins such as urethane acrylate, acrylic, epoxy, and phenoxy resins, elastomers, and silicon rubbers. The flow reducing members **5** may be formed by depositing and patterning any of these resins on the decoration layer **2** by a printing process, for example. Naturally, the flow reducing members **5** do not have to be formed by a printing process. Alternatively, the flow reducing members **5** may also be formed by a dry film process that is often adopted in an IC manufacturing process or by putting the flow reducing members into the adhesive in advance and then distributing those members when the adhesive layer **4** is formed.

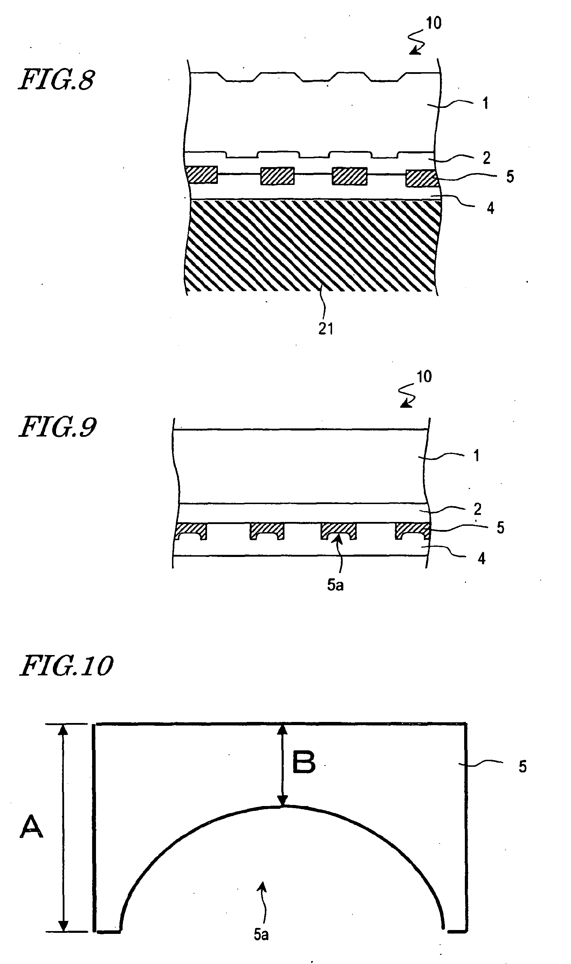

If the flow reducing members **5** are at least as hard as the decoration layer **2,** then level differences will be created on the respective surfaces of the decoration layer **2** and the base member **1** when the decorative sheet **10** is attached to the formed product **21** as shown in FIG. **8****.** As a result, a regular rugged pattern, corresponding to the arrangement pattern of the flow reducing members **5,** can be formed on the surface of the decorated formed product (i.e., on the outer surface of the decorative sheet **10).** In a situation where such a rugged pattern has been formed on the surface of the decorated formed product, even if uneven gloss were produced due to non-uniform distribution of the adhesive, that unevenness would be much less sensible. In addition, since such a rugged pattern is recognized as a dimple pattern, its decorative effect would make the product's appearance even more attractive and impressive for potential buyers.

Also, as shown in FIG. **9****,** the flow reducing members **5** preferably have a recess **5a** on their surface in contact with the adhesive layer **4.** If the surface of the flow reducing members **5** has such a shape, the adhesive will be retained in the recess **5a** and the flow of the adhesive layer **4** can be reduced highly effectively. To retain the adhesive in the recess **5a** effectively, the thickness **B** of the thinnest portion of the flow reducing member **5** is preferably two-thirds or less of the thickness **A** of the thickest portion thereof. The flow reducing member **5** with the recess **5a** may be formed by a screen printing process, for example.

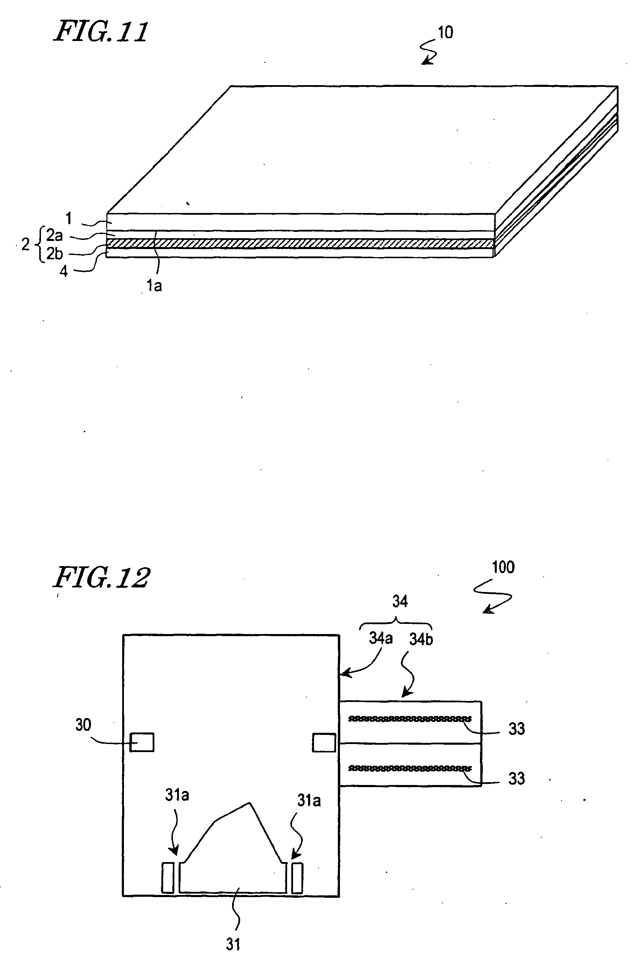

The decoration layer **2** does not have to be a single layer as shown in the drawings but may include multiple layers. Also, the decoration layer **2** may include not only an ink layer **2a** but also a metal layer **2b** as shown in FIG. **11****.** If the decoration layer **2** includes a metal layer **2b,** the decorative sheet **10** can have a metallic color, which gives the product a great-looking metallic appearance, due to the metallic gloss of the metal layer **2b.**

The metal layer **2b** may be made of tin, aluminum, gold, copper, zinc, silver, indium or an alloy thereof. Optionally, the decoration layer **2** may consist essentially of the metal layer **2b** without the ink layer **2a.** The metal layer **2b** may be formed by an evaporation process, for example. Specifically, the metal layer **2b** may be formed by evaporating a metal directly on the base member **1** (or on the ink layer **2a).** Alternatively, a metal may be evaporated on a carrier film provided separately and then the stack may be bonded onto the base member **1** (or the ink layer **2a)** to form the metal layer **2b.**

According to the conventional method, if a decorative sheet including a metal layer were used, then the string of uneven gloss would become even more noticeable to diminish the beauty of its appearance significantly. For that reason, the present invention is even more effective in a situation where the decorative sheet **10** includes a metal layer **2b**.

Also, the glass transition temperature of the material of the base member **1** is typically higher than the melting point of the material of the adhesive layer **4.** According to the conventional method shown in FIGS. **21(a)** through **21(c)****,** if there were a big difference between the glass transition temperature of the material of the base member **1** and the melting point of the material of the adhesive layer **4** (i.e., if the melting point of the material of the adhesive layer **4** were much lower than the glass transition temperature of the material of the base member **1),** then the adhesive would have so high flowability as to be distributed unevenly and diminish the beauty of its appearance easily when the decorative sheet **110** is heated and softened. In contrast, according to the present invention, even if the melting point of material of the adhesive layer **4** is much lower than the glass transition temperature of the material of the base member **1** by 30 °C or more, for example, fine appearance without gloss unevenness is still realized.

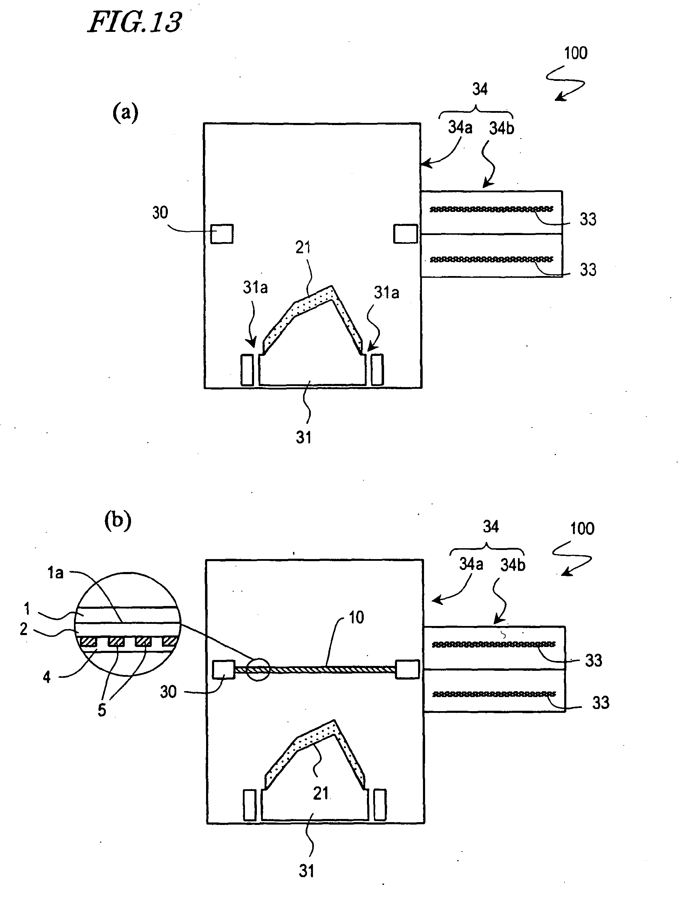

Hereinafter, a method of making a decorated formed product using the decorative sheet **10** will be described with reference to FIGS. **12** through **15****.** FIG. **12** schematically illustrates a vacuum forming system **100** for use to make a decorated formed product. FIGS. **13** through **15** are cross-sectional views schematically illustrating respective processing steps of the manufacturing process.

The vacuum forming system **100** shown in FIG. **12** includes a gripping frame **30** to grip a decorative sheet **10** thereon, a supporting stage **31** for supporting a formed product thereon, a heater (such as a far-infrared heater) **33** for heating the decorative sheet **10,** and a vacuum vessel **34** that stores all of these members.

The vacuum vessel **34** consists of a main vessel **34a** that stores the gripping frame **30** and the supporting stage **31,** and a sub-vessel **34b** that stores the heater **33.** When the decorative sheet **10** is heated, the heater **33** is introduced into the main vessel **34a.**

The supporting stage **31** has a plurality of openings **31a,** through which the air inside the main vessel **34a** can be exhausted. Although not shown in FIG. **12****,** a mechanism for introducing a gas from outside of this system into the main vessel **34a** (e.g., a hose connected to an external pump) is also provided for the main vessel **34a.**

Using this vacuum forming system **100,** a decorated formed product may be made in the following manner, for example.

First, as shown in FIG. **13(a)****,** a formed product **21** is provided and mounted on the supporting stage **31.** The formed product **21** may be made of a resin material, a metallic material or any other suitable material by a known technique. For example, the formed product **21** may be made of a resin material by an injection molding process.

Thereafter, as shown in FIG. **13(b)****,** a decorative sheet **10** is provided and fixed onto the gripping frame **30.** As partially enlarged in FIG. **13(a)****,** the decorative sheet **10** includes flow reducing members **5** in its adhesive layer **4.**

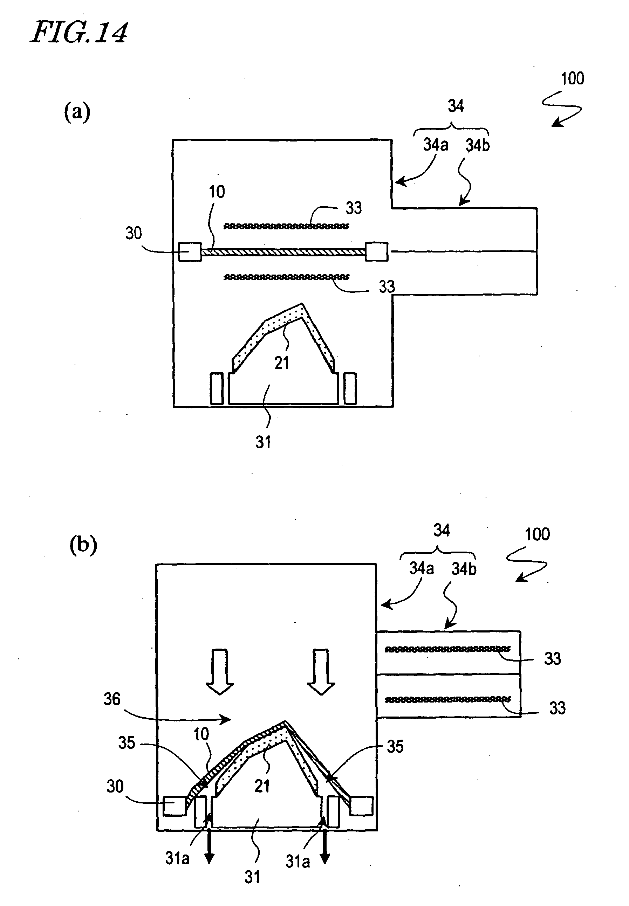

Subsequently, as shown in FIG. **14(a)****,** the decorative sheet **10** is heated with the heater **33**, thereby softening the decorative sheet **10.** In this process step, the decorative sheet **10** is preferably heated to a temperature of (T_{A}-40) °C to (T_{A}+20) °C, where T_{A} is the load deflection temperature of the base member **1.** If the decorative sheet **10** were heated to a temperature lower than (T_{A}-40) °C,then the base member **1** would not be deformed easily and could crack when bonded to the formed product and formed into a desired shape or could even be non-formable at all. On the other hand, if the decorative sheet **10** were heated to a temperature higher than (T_{A} + 20) °C, the sheet being heated could stretch too much to be formed into a desired shape.

Typically, the decorative sheet **10** is heated to a temperature that is equal to or higher than the load deflection temperature **T_{A}** of the base member **1**. Also, in this process step, the decorative sheet **10** is preferably heated to a temperature that is 20 to 30 °C higher than the lowest adhesion temperature of the adhesive layer **4** to ensure good adhesiveness for the adhesive layer **4.** The load deflection temperature is measured under a prescribed load (of 0.45 MPa, for example) compliant with the ASTM D648 standard, which is a standard method of measuring a load deflection temperature that was set by the American Society for Testing and Materials. According to this standard, the temperature of a test piece is raised under a prescribed bending load and the temperature at which the deflection of the piece reaches a predetermined value is defined as the load deflection temperature.

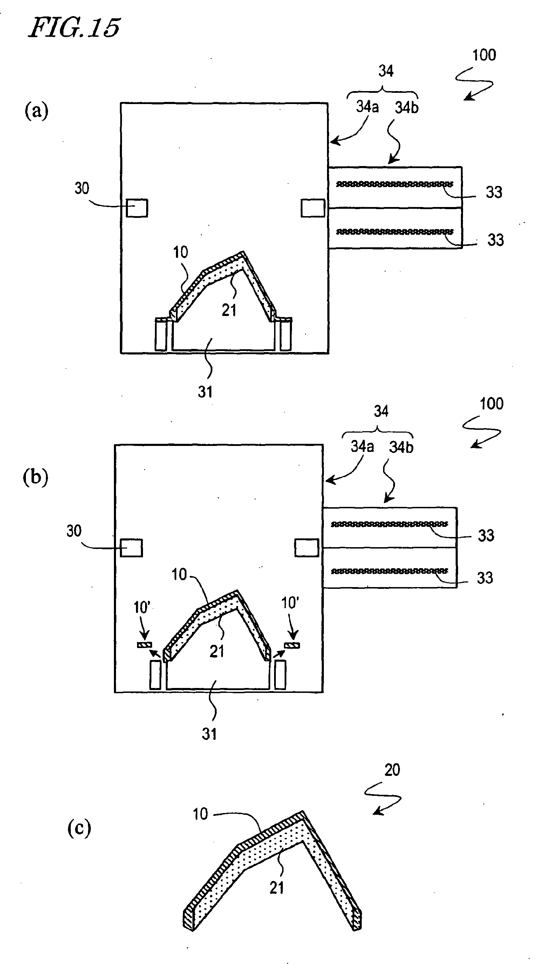

Thereafter, as shown in FIG. **14(b)****,** the decorative sheet **10** is brought down toward the formed product **21** and then the pressure in the space **35** between the decorative sheet **10** and the formed product **21** is reduced, thereby bonding the decorative sheet **10** onto the formed product **21** as shown in FIG. **15(a)****.** If the pressure in the space **35** between the decorative sheet **10** and the formed product **21** is reduced, then the decorative sheet **10** will be pressed against the formed product **21** with uniform pressure. As a result, the sheet **10** can be bonded to the product **21** effectively. In this preferred embodiment, the space **36** over the decorative sheet **10** is also pressurized, thereby making an even bigger pressure difference. Consequently, the decorative sheet **10** can be bonded even more quickly. The pressure in the space **35** may be reduced by exhausting the air in the space **35** through the openings **31a** of the supporting stage **31** using a vacuum pump, for example. On the other hand, the pressure in the space **36** may be increased by supplying compressed air thereto using a compressor, for example. In this bonding process step, the decorative sheet **10** is stretched and formed so as to fit the surface shape of the formed product **21** closely. If the decorative sheet **10** were too thin, then the beauty of its appearance would diminish. That is why this process step is preferably carried out such that the thickness of the decorative sheet **10** bonded becomes at least 0.4 times as large as, more preferably 0.5 or more times as large as, the original thickness.

Subsequently, as shown in FIG. **15(b)****,** an excessive portion **10'** of the decorative sheet **10** is trimmed with a rotating blade or any other cutter, and then the formed product **21** is removed from the supporting stage **30,** thereby completing a formed product **20** with a decorated surface as shown in FIG. **15(c)****.**

The decorative sheet **10** of this preferred embodiment includes flow reducing members **5** for reducing the flow of the adhesive layer **4.** That is why even if the base member **1** shrinks in any of this series of process steps, the flow of the adhesive layer **4** due to the shrinkage can be virtually blocked. For that reason, the adhesive is not easily raised locally unlike the adhesive shown in FIG. **21(c)****.** Thus, in the decorative sheet **10,** the adhesive is rarely distributed unevenly, and therefore, the string of uneven gloss can be virtually eliminated.

As described above, by using the decorative sheet **10** of this preferred embodiment, a formed product can be decorated without diminishing the beauty of its appearance. For that reason, the decorative sheet **10** can be used effectively to decorate a formed product with significant ruggedness, e.g., to decorate a deep-drawn formed product.

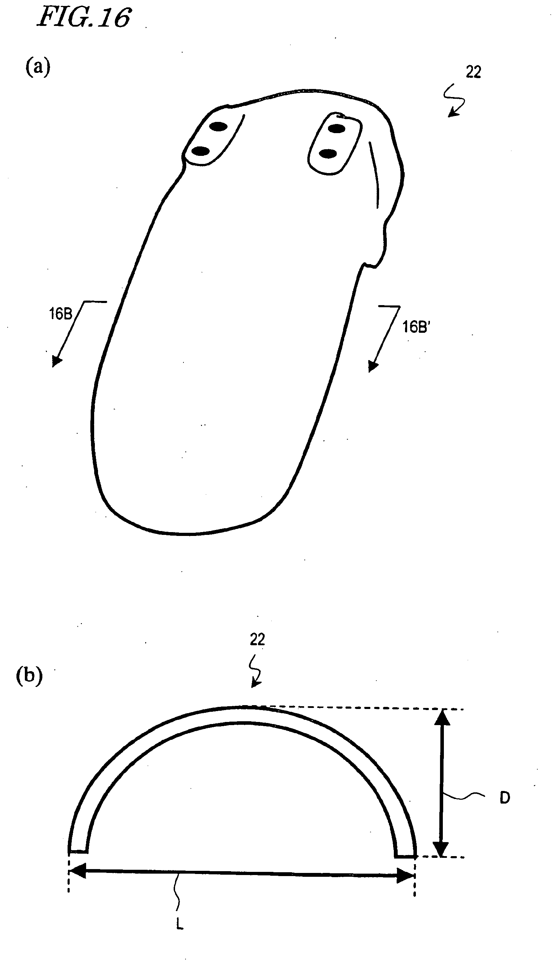

FIGS. **16(a)** and **16(b)** illustrate an example of a deep-drawn formed product. The motorcycle fender **22** shown in FIGS. **16(a)** and **16(b)** has a shape with a large D/L ratio (which will be referred to herein as a "draw ratio" and), which is the ratio of the draw depth **D** to the draw diameter **L** (i.e., the width of a cross section of a formed product in the latitudinal direction). That is to say, the fender **22** has a deep-drawn shape. By using the decorative sheet **10,** the diminution in the beauty of appearance due to the uneven distribution of the adhesive can be minimized, and therefore, even a formed product with a relatively large draw diameter L and a rather high draw ratio D/L can also be decorated effectively. For example, according to the conventional method, if a formed product, of which the draw diameter L and draw depth D satisfy L ≧100 mm and D/L≧1/3, is decorated, the beauty of its appearance diminishes significantly. However, by using the decorative sheet **10** of this preferred embodiment, even a formed product with such a shape can also be decorated effectively without diminishing the beauty of its appearance.

A formed product decorated with the decorative sheet **10** of this preferred embodiment can be used effectively as an interior or exterior member for a motor vehicle or as an exterior member for a consumer electronic appliance. For example, the formed product can be used effectively as the tank housing **51,** the front fender **52** or the tail cowl **53** of a motorcycle **50** as shown in FIG. **17****.** As used herein, the "motor vehicle" broadly refers to a self-propelled vehicle or machine that is used to transport passengers or goods or to transfer an object. Examples of motor vehicles include passenger cars, motorcycles, buses, trucks, tractors, airplanes, motorboats, and civil engineering vehicles. The motor vehicles include not only vehicles equipped with an internal combustion engine such as a gasoline engine but also those equipped with an electric motor.

Also, in the formed product decorated with the decorative sheet **10** of this preferred embodiment, the decoration layer **2** is protected by the base member **1** and can maintain fine appearance for a long time. For that reason, the formed product decorated with the decorative sheet **10** can be used outdoors particularly effectively in ships, outboard engines, water vehicles, all terrain vehicles (ATVs), snowmobiles, two wheelers, and golf cars.

The present inventors actually made a decorated formed product using the decorative sheet **10** of this preferred embodiment and evaluated its appearance. The results of the evaluation will be described below.

### Example #1

A polycarbonate film Eupiron D02, produced by Mitsubishi Gas Chemical Co., Inc. and having a thickness of 0.5 mm, was used as a base member and a pattern was printed on this film with ink to make a decoration layer. On this decoration layer, circular flow reducing members of a urethane acrylate resin, each having a diameter of 4 mm and a thickness of 10 *µ* m, were arranged at an interval of 4 mm. The flow reducing members were formed by a printing process. An adhesive layer of a urethane based adhesive UNH790, produced by Nihon Unipolymer Co., Ltd., was deposited to a thickness of 30 µm so as to cover the decoration layer and the flow reducing members arranged on the decoration layer.

A formed product was decorated within a vacuum forming system with a decorative sheet obtained in this manner. As a result, fine appearance was realized without producing strings of uneven gloss.

### Example #2

A decorative sheet was made as in the first specific example described above except that the flow reducing members had a diameter of 5 mm and a thickness of 5 µm and were arranged at an interval of 5 mm. A formed product was decorated within a vacuum forming system with a decorative sheet obtained in this manner. As a result, as in the first specific example just described, fine appearance was realized without producing strings of uneven gloss.

### Example #3

A decorative sheet was made as in the first specific example described above except that the adhesive layer was deposited to a thickness of 100 µm. A formed product was decorated within a vacuum forming system with a decorative sheet obtained in this manner. As a result, as in the first specific example just described, fine appearance was realized without producing strings of uneven gloss.

### Example #4

A decorative sheet was made as in the first specific example described above except that the flow reducing members were arranged in a ring pattern with an outside diameter of 4 mm and an inside diameter of 3.5 mm. A formed product was decorated within a vacuum forming system with a decorative sheet obtained in this manner. As a result, fine appearance was also realized without producing strings of uneven gloss. The appearance realized by this specific example was superior to that realized by the first specific example.

### Comparative Example

A polycarbonate film Eupiron D02, produced by Mitsubishi Gas Chemical Co., Inc. and having a thickness of 0.5 mm, was used as a base member and a decoration layer was formed on this film by an evaporation process. Thereafter, a urethane based adhesive UNH790, produced by Nihon Unipolymer Co., Ltd., was deposited on this decoration layer to form an adhesive layer with a thickness of 30 µm.

A formed product was decorated within a vacuum forming system with a decorative sheet obtained in this manner. As a result, strings of uneven gloss were produced as shown in FIG. 20 to ruin its fine appearance.

### INDUSTRIAL APPLICABILITY

The present invention provides a decorative sheet that can decorate a formed product without diminishing the beauty of its appearance.

The appearance of a formed product decorated with the decorative sheet of the present invention is so fine that the product can be used effectively as an exterior or interior member for any of various motor vehicles or as an exterior member for any of numerous consumer electronic appliances.

## Claims

1. A decorative sheet for use to decorate a formed product, the sheet comprising:
a decoration layer;
a base member that supports the decoration layer;
an adhesive layer for adhering the decoration layer and the base member onto the formed product; **characterised in that**
a flow reducing member for reducing the flow of the adhesive layer, the flow reducing member being provided in the adhesive layer and being made of a material having a higher melting point than that of a material of the adhesive layer.

2. The decorative sheet of claim 1, wherein the flow reducing member is fixed on the decoration layer.

3. The decorative sheet of claim 2, wherein the adhesive layer is arranged so as to cover the decoration layer and the flow reducing member that is fixed on the decoration layer.

4. The decorative sheet of one of claims 1 to 3, wherein the melting point of the material of the flow reducing member is higher than that of the material of the adhesive layer by at least 20° C.

5. The decorative sheet of one of claims 1 to 4, wherein the elasticity of the material of the flow reducing member is at least twice as high as that of the material of the adhesive layer at 80 °C.

6. The decorative sheet of one of claims 1 to 5, wherein the flow reducing member has a recess on its surface that is in contact with the adhesive layer.

7. The decorative sheet of claim 6, wherein the thinnest portion of the flow reducing member with the recess is at most two-thirds as thick as the thickest portion thereof.

8. The decorative sheet of one of claims 1 to 7, comprising a plurality of flow reducing members.

9. The decorative sheet of claim 8, wherein the flow reducing members are arranged at regular intervals.

10. The decorative sheet of one of claims 1 to 9, wherein the melting point of the material of the adhesive layer is lower than the glass transition temperature of the material of the base member by at least 30 °C.

11. The decorative sheet of one of claims 1 to 10, wherein the material of the base member is a resin.

12. The decorative sheet of claim 11, wherein the resin is a thermoplastic resin.

13. A decorated formed product comprising: a formed product; and the decorative sheet of one of claims 1 to 12 that has been bonded to the surface of the formed product.

14. The decorated formed product of claim 13, wherein the formed product has been formed by a deep-drawing process and has such a shape that a draw diameter L and a draw depth D satisfy L≧100 mm and D/L≧1/3.

15. The decorated formed product of claim 13 or 14, wherein an outer surface of the decorative sheet bonded to the surface of the formed product has ruggedness corresponding to an arrangement pattern of the flow reducing members.

16. A motor vehicle comprising the decorated formed product of one of claims 13 to 15.

## Patentansprüche

1. Dekorfolie zur Verwendung, um ein geformtes Erzeugnis zu dekorieren, wobei die Folie aufweist:
eine Dekorschicht;
ein Basisteil, das die Dekorschicht trägt;
eine Haftschicht zum Anhaften der Dekorschicht und des Basisteils auf dem geformten Erzeugnis; **gekennzeichnet durch**
ein fließreduzierendes Teil zum Reduzieren des Fließens der Haftschicht, wobei das fließreduzierende Teil in der Haftschicht vorgesehen ist und aus einem Material mit einem höheren Schmelzpunkt als derjenige von einem Material der Haftschicht hergestellt ist.

2. Dekorfolie nach Anspruch 1, wobei das fließreduzierende Teil auf der Dekorschicht befestigt ist.

3. Dekorfolie nach Anspruch 2, wobei die Haftschicht angeordnet ist, um die Dekorschicht und das fließreduzierende Teil, das auf der Dekorschicht befestigt ist, abzudecken.

4. Dekorfolie nach einem der Ansprüche 1 bis 3, wobei der Schmelzpunkt des Materials des fließreduzierenden Teils um zumindest 20° C höher als der des Materials der Haftschicht ist.

5. Dekorfolie nach einem der Ansprüche 1 bis 4, wobei die Elastizität des Materials des fließreduzierenden Teils zweimal so hoch wie die des Materials der Haftschicht bei 80" C ist.

6. Dekorfolie nach einem der Ansprüche 1 bis 5, wobei das fließreduzierende Teil eine Aussparung an seiner Oberfläche hat, die mit der Haftschicht in Kontakt ist.

7. Dekorfolie nach Anspruch 6, wobei der dünnste Abschnitt des fließreduzierenden Teils mit der Aussparung höchstens zwei Drittel so dick wie der dickste Abschnitt derselben ist,

8. Dekorfolie nach einem der Ansprüche 1 bis 7, die eine Mehrzahl von fließreduzierenden Teilen aufweist.

9. Dekorfolie nach Anspruch 9, wobei die fließreduzierenden Teile in regelmäßigen Abständen angeordnet sind.

10. Dekorfolie nach einem der Ansprüche 1 bis 9, wobei der Schmelzpunkt des Materials der Haftschicht um mindestens 30° C niedriger als die Glasumwandlungstemperatur des Materials des Basisteils ist.

11. Dekorfolie nach einem der Ansprüche 1 bis 10, wobei das Material des Basisteils Harz ist.

12. Dekorfolie nach Anspruch 11, wobei das Harz ein thermoplastisches Harz ist.

13. Dekoriertes, gebildetes Erzeugnis, aufweisend: ein gebildetes Erzeugnis; und die Dekorfolie nach einem der Ansprüche 1 bis 12, die mit der Oberfläche des gebildeten Erzeugnisses haftverbunden ist.

14. Dekoriertes, geformtes Erzeugnis nach Anspruch 13, wobei das geformte Erzeugnis durch ein Tiefziehverfahren gebildet worden ist und solch eine Form hat, dass ein Ziehdurchmesser L und eine Ziehtiefe D den Bedingungen L ≧ 100 mm und D/L ≧ 1/3 genügt.

15. Dekoriertes, geformtes Erzeugnis nach Anspruch 13 oder 14, wobei eine äußere Oberfläche der Dekorfolie, haftverbunden mit der Oberfläche des gebildeten Erzeugnisses, ein Rauheit hat, die einem Anordnungsmuster der fließreduzierenden Teile entspricht.

16. Motorfahrzeug als das dekorierte, geformte Erzeugnis nach einem der Ansprüche 13 bis 15.

## Revendications

1. Feuille décorative destinée à être utilisée pour décorer un produit formé, la feuille comprenant :
une couche de décoration ;
un élément de base qui supporte la couche de décoration ;
une couche adhésive destinée à coller la couche de décoration et l'élément de base sur le produit formé ; **caractérisée par** :
un élément de réduction d'écoulement destiné à réduire l'écoulement de la couche adhésive, l'élément de réduction d'écoulement étant prévu dans la couche adhésive et étant fait d'un matériau possédant un point de fusion supérieur à celui d'un matériau de la couche adhésive.

2. Feuille décorative selon la revendication 1, dans laquelle l'élément de réduction d'écoulement est fixé sur la couche de décoration.

3. Feuille décorative selon la revendication 2, dans laquelle la couche adhésive est agencée afin de couvrir la couche de décoration et l'élément de réduction d'écoulement qui est fixé sur la couche de décoration.

4. Feuille décorative selon une des revendications 1 à 3, dans laquelle le point de fusion du matériau de l'élément de réduction d'écoulement est supérieur à celui du matériau de la couche adhésive d'au moins 20°C.

5. Feuille décorative selon une des revendications 1 à 4, dans laquelle l'élasticité du matériau de l'élément de réduction d'écoulement est au moins deux fois supérieure à celle du matériau de la couche adhésive à 80°C.

6. Feuille décorative selon une des revendications 1 à 5, dans laquelle l'élément de réduction d'écoulement possède un évidement sur sa surface qui est en contact avec la couche adhésive.

7. Feuille décorative selon la revendication 6, dans laquelle la partie la plus mince de l'élément de réduction d'écoulement avec l'évidement est au plus deux tiers plus épaisse que la partie la plus épaisse de celui-ci.

8. Feuille décorative selon une des revendications 1 à 7, comprenant une pluralité d' éléments de réduction d'écoulement.

9. Feuille décorative selon la revendication 8, dans laquelle les éléments de réduction d'écoulement sont agencés à des intervalles réguliers.

10. Feuille décorative selon une des revendications 1 à 9, dans laquelle le point de fusion du matériau de la couche adhésive est inférieur à celui de la température de transition vitreuse du matériau de l'élément de base d'au moins 30°C.

11. Feuille décorative selon une des revendications 1 à 10, dans laquelle le matériau de l'élément de base est une résine.

12. Feuille décorative selon la revendication 11, dans laquelle la résine est une résine thermoplastique.

13. Produit formé décoré comprenant : un produit formé ; et la feuille décorative selon une des revendications 1 à 12 qui a été fixée à la surface du produit formé.

14. Produit formé décoré selon la revendication 13, dans lequel le produit formé a été formé par procédé d'emboutissage profond et possède une forme telle qu'un diamètre d'emboutissage L et une profondeur d'emboutissage D satisfont L≧100 mm et D/L≧1/3.

15. Produit formé décoré selon la revendication 13 ou 14, dans lequel une surface extérieure de la feuille décorative fixée à la surface du produit formé possède une irrégularité correspondant à une configuration d'agencement des éléments de réduction d'écoulement.

16. Véhicule motorisé comprenant le produit formé décoré selon une des revendications 13 à 15.
